# EUROPÄISCHE PATENTSCHRIFT

(11) **EP 3 391 128 B1**
(45) Veröffentlichungstag und Bekanntmachung des Hinweises auf die Patenterteilung: **21.08.2019**
(21) Anmeldenummer: 16805461.7
(22) Anmeldetag: 05.12.2016
(51) Int. Cl.: G02C 5/20, G02C 5/14, B29D 12/02, B29C 45/00, G02C 5/22

(54) **BRILLENBÜGEL**
EYEGLASS TEMPLE
BRANCHE DE LUNETTES

(30) Priorität: 17.12.2015 DE 102015225775
(43) Veröffentlichungstag der Anmeldung: 24.10.2018
(73) Patentinhaber: Uvex Arbeitsschutz GmbH, 90766 Fürth (DE)
(72) Erfinder: KÜHNLEIN, Florian, 90763 Fürth (DE); WIEGLER, Markus, 90409 Nürnberg (DE)
(74) Vertreter: Rau, Schneck & Hübner Patentanwälte Rechtsanwälte PartGmbB
(86) Internationale Anmeldenummer: PCT/EP2016/079713
(87) Internationale Veröffentlichungsnummer: WO 2017/102398

(56) Entgegenhaltungen:
- US-A1- 2011 157 542
- US-B1- 7 543 932
- US-B1- 9 188 795

## Beschreibung

Die vorliegende Patentanmeldung nimmt die Priorität der deutschen Patentanmeldung DE 10 2015 225 775.4 in Anspruch.

Die Erfindung betrifft ein Verfahren zur Herstellung eines Brillenbügels. Ferner richtet sich die Erfindung auf einen Brillenbügel.

Brillenbügel sind aus dem Stand der Technik allgemein bekannt. Diese sind Bestandteil einer Brille und sorgen für einen sicheren, festen Sitz der Brille an dem Kopf eines Brillenträgers.

Insbesondere durch offenkundige Vorbenutzung sind auch Brillenbügel mit Inklinationsverstellung bekannt, um den Winkel zwischen der Blickrichtung eines Brillenträgers und der Scheibenoberfläche der Brille an den jeweiligen Brillenträger anzupassen. Die Herstellung derartiger Brillenbügel ist im Allgemeinen aufwändig. Ferner halten diese oftmals hohen mechanischen Beanspruchungen nicht stand.

Aus der US 7,543,932 B1 ist ein Brillenbügel mit einem ersten Verbindungsteil bekannt, das mit einem Rahmen gelenkig verbindbar ist und einen ersten Rippenring aufweist. Der Brillenbügel umfasst ferner einen hinteren Arm, der mit dem Verbindungsteil in Inklinationsverbindung steht und zwei einander gegenüberliegende zweite Rippenringe hat. Die zweiten Rippenringe sind dem ersten Rippenring zugeordnet.

Die US 9,188,795 B1 offenbart eine Brille mit zwei Bügeln, die jeweils einen vorderen Schwenkarm und einen mit dem vorderen Schwenkarm integral ausgebildeten hinteren Cliparm aufweisen. Der Schwenkarm und der Cliparm sind beispielsweise durch Doppel-Spritzgießen gebildet.

Die US 2011/0157542 A1 offenbart eine Brille mit an einer Scheibenanordnung seitlich angeordneten Schwenkverbindungseinheiten, die Brillenbügel tragen. An jedem Brillenbügel ist eine Öffnung ausgebildet, die in montiertem Zustand des Brillenbügels von einem Eingriffsabschnitt der jeweiligen Schwenkverbindungseinheit unter Bildung eines Inklinationsgelenks durchsetzt ist. Benachbart zu jeder Öffnung ist eine Verzahnung angeordnet.

Aus der DE 37 27 861 C1 ist ein Gelenk zum Verbinden eines Bügelschafts mit einem Gelenkstück einer Brille sowie ein Verfahren zur Herstellung eines solchen Gelenks bekannt. Der Bügelschaft ist um eine Anlenk-Lagerachse verschwenkbar. Er ist in sich starr. Eine Brille mit einem solchen Bügelschaft ist nicht optimal an den Brillenträger anpassbar, sodass häufig der notwendige bzw. gewünschte Sehkomfort nicht gegeben ist.

Die DE 698 15 241 T2 offenbart ein Verfahren zur Herstellung einer Gelenkanordnung für eine Sonnenbrille.

Aus der US 7,175,270 B2 ist ein Mehrschuss-Gießverfahren zum Herstellen von Brillen-Gelenkverbindungen bekannt. Brillen mit derartigen Brillen-Gelenkverbindungen sind ebenfalls nicht optimal an den Brillenträger anpassbar, sodass auch hier der Sehkomfort häufig nicht gegeben ist.

Der Erfindung liegt daher die Aufgabe zugrunde, ein Verfahren zur Herstellung eines Brillenbügels zu schaffen, das zu einem kostengünstigen und benutzerfreundlichen Brillenbügel führt. Außerdem soll ein entsprechender Brillenbügel angegeben werden.

Diese Aufgabe wird erfindungsgemäß durch die in den Ansprüchen 1 und 8 genannten Merkmale gelöst. Der Kern liegt darin, dass der ein Brillenbügel-Grundteil und Brillenbügel-Verstellteil umfassende Brillenbügel in genau einem Spritzgießwerkzeug erzeugt wird, wobei diese Teile bereits bei Abschluss des Spritzvorgangs, insbesondere unlösbar, günstigerweise direkt, miteinander, insbesondere gelenkig, verbunden sind. Aufwändige Montagearbeiten zum Verbinden des Brillenbügel-Grundteils und Brillenbügel-Verstellteils entfallen somit.

Der Brillenbügel erlaubt eine Inklinationsverstellung, um den Winkel zwischen einer Blickrichtung eines Brillenträgers und einer Scheibenoberfläche einer Brille an den jeweiligen Brillenträger anzupassen. Der Inklinations-Lagerkörper ist günstigerweise Bestandteil eines Inklinationsgelenks des Brillenbügels.

Durch die Schwenkbewegung zwischen dem Brillenbügel-Grundteil und dem Brillenbügel-Verstellteil ist die Brillenbügel-Betriebsstellung aus der Brillenbügel-Spritzgießstellung (= eine zu der Brillenbügel-Betriebsstellung verschiedene Stellung) erreichbar. Der Brillenbügel ist in der Brillenbügel-Betriebsstellung vollständig fertig gestellt und als Brillenbestandteil einsetzbar. Herkömmliche Schraub-, Steck- oder Rastvorgänge zur Verbindung des Brillenbügel-Grundteils und des Brillenbügel-Verstellteils miteinander sind so hinfällig. Die relative Schwenkbewegung zwischen dem Brillenbügel-Grundteil und dem Brillenbügel-Verstellteil zum Erreichen der Brillenbügel-Betriebsstellung erfolgt vorzugsweise händisch oder maschinell.

Es ist zweckmäßig, wenn zwischen der Brillenbügel-Betriebsstellung und der Brillenbügel-Spritzgießstellung beziehungsweise der zu der Brillenbügel-Betriebsstellung verschiedenen Stellung ein angularer Abstand um die Inklinations-Lagerachse von mindestens 20°, bevorzugter mindestens 30°, vorliegt. Günstigerweise ist der Winkelbereich kleiner 90°, bevorzugter kleiner als 70°.

Das Brillenbügel-Grundteil und das Brillenbügel-Verstellteil sind in der Brillenbügel-Betriebsstellung um mindestens 2°, bevorzugter mindestens 5°, um den Inklinations-Lagerkörper zueinander verschwenkbar. Sie sind zwischen zwei Inklinationsendstellungen verschwenkbar.

Ein mit einer Brillenbügel-Schwenk-Rastanordnung zum rastenden Verschwenken des Brillenbügel-Verstellteils und des Brillenbügel-Grundteils um den Inklinations-Lagerkörper zueinander hergestellter Brillenbügel ist besonders benutzerfreundlich. Die Inklination der mindestens einen Brillenscheibe der Brille ist so äußerst gut einstellbar. Die Brillenbügel-Schwenk-Rastanordnung gibt günstigerweise mehrere stabile Raststufen vor.

Die erste Rasteinrichtung hat günstigerweise mindestens einen ersten Rastzahn. Wenn mehrere erste Rastzähne vorhanden sind, so sind diese günstigerweise hintereinander angeordnet.

Die zweite Rasteinrichtung hat günstigerweise mindestens einen zweiten Rastzahn. Wenn mehrere zweite Rastzähne vorhanden sind, so sind diese günstigerweise hintereinander angeordnet.

Die erste Rasteinrichtung und die zweite Rasteinrichtung sind in der Brillenbügel-Spritzgießstellung beziehungsweise der zu der Brillenbügel-Betriebsstellung verschiedenen Stellung außer Eingriff. Die Brillenbügel-Schwenk-Rastanordnung ist so funktionsunfähig bzw. unwirksam. Günstigerweise sind die Rasteinrichtungen dann zueinander verschwenkt bzw. in Bezug auf die ersten und zweiten Rastzähne hintereinander angeordnet.

Die beiden Materialien zur Herstellung des Brillenbügels werden günstigerweise zeitlich nacheinander in das Spritzgießwerkzeug eingespritzt.

Es ist zweckmäßig, wenn das Brillenbügel-Grundteil vor dem Einspritzen des zweiten Materials in das Spritzgießwerkzeug zumindest teilweise formstabil ist. Günstigerweise ist dann das erste Material bereits vollständig ausgehärtet bzw. erstarrt.

Günstigerweise ist das Brillenbügel-Verstellteil vor dem Entfernen aus dem Spritzgießwerkzeug bereits zumindest teilweise formstabil. Günstigerweise ist das zweite Material dann bereits vollständig ausgehärtet.

Das Entfernen des Brillenbügels, der das Brillenbügel-Grundteil und das mit diesem verbundene Brillenbügel-Verstellteil einschließt, aus dem Spritzgießwerkzeug erfolgt günstigerweise per Hand oder maschinell.

Bei dem Brillenbügel-Herstellungs-Verfahren handelt es sich günstigerweise um einen Zweikomponenten-Montagespritzgussprozess. Günstigerweise entsteht zwischen dem ersten Material und dem zweiten Material weder in dem Spritzgießwerkzeug noch später eine haftende bzw. klebende Verbindung.

Es ist von Vorteil, wenn das Brillenbügel-Grundteil und das Brillenbügel-Verstellteil derart gespritzt sind/werden, dass diese unmittelbar nach Erzeugung miteinander in gelenkiger Verbindung stehen.

Es ist von Vorteil, wenn der Inklinations-Lagerkörper stift- bzw. zapfenartig ausgeführt ist. Es ist zweckmäßig, wenn der Inklinations-Lagerkörper zumindest in einem Inklinations-Lagerbereich zylindrisch ausgebildet ist. Günstigerweise umgibt das Brillenbügel-Verstellteil den Inklinations-Lagerkörper vollständig umfangsseitig bzw. über dessen Inklinations-Lagerbereich. Es ist von Vorteil, wenn der Inklinations-Lagerkörper eine Schwenkachse zum Verschwenken des Brillenbügel-Verstellteils gegenüber dem Brillenbügel-Grundteil vorgibt.

Es ist zweckmäßig, wenn das Spritzgießwerkzeug mindestens zwei Werkzeugteile umfasst. Günstigerweise sind diese relativ zueinander beweglich. Es ist von Vorteil, wenn jedes Werkzeugteil zumindest bereichsweise beheizbar ist. Günstigerweise hat das Spritzgießwerkzeug mindestens einen ersten Einspritzkanal zum Einspritzen des ersten Materials in eine Brillenbügel-Grundteil-Kavität des Spritzgießwerkzeugs und mindestens einen zweiten Einspritzkanal zum Einspritzen des zweiten Materials in eine Brillenbügel-Verstellteil-Kavität des Spritzgießwerkzeugs.

Es ist zweckmäßig, wenn der Brillenbügel aus dem Brillenbügel-Grundteil und Brillenbügel-Verstellteil besteht. Günstigerweise besteht der Brillenbügel also aus zwei Hauptteilen. Vorzugsweise ist das Brillenbügel-Grundteil einteilig ausgebildet. Das Brillenbügel-Grundteil kann beispielsweise auch mindestens eine angespritzte Komponente, insbesondere weiche Komponente, umfassen. Das Brillenbügel-Verstellteil ist bevorzugt einteilig ausgebildet. Das Brillenbügel-Verstellteil kann beispielsweise auch mindestens eine angespritzte Komponente, insbesondere weiche Komponente, umfassen.

Günstigerweise liegt das Brillenbügel-Verstellteil außenseitig an dem jeweiligen Brillenbügel-Grundteil an.

Das Brillenbügel-Grundteil hat vorzugsweise mindestens einen Anlenk-Lagerkörper zur gelenkigen Verbindung mit einer Brillenscheibe, einem Brillenrahmen und/oder einem Brillenrahmenteil einer Brille.

Weitere vorteilhafte Ausgestaltungen der Erfindung sind in den Unteransprüchen angegeben.

Die Ausgestaltung gemäß dem Unteranspruch 2 ist äußerst fertigungsfreundlich bzw. wirtschaftlich. Günstigerweise ist die Brillenbügel-Verstellteil-Kavität in dem Spritzgießwerkzeug durch mindestens einen Spritzgießwerkzeug-Drehteller und/oder verlagerbaren Spritzgießwerkzeug-Schieber erzeugbar.

Gemäß dem Unteranspruch 3 sind das erste Material und das zweite Material unterschiedliche Materialien, insbesondere Kunststoffmaterialien. Es ist von Vorteil, wenn die beiden Materialien aus der Gruppe von PBT (Polybutylenterephthalat), POM (Polyoxymethylen), PA (Polyamid) oder ABS (Acrylnitril-Butadien-Styrol) verwendet werden.

Es ist von Vorteil, wenn das erste Material einen höheren Schmelzpunkt als das zweite Material hat. Diese Ausgestaltung verhindert wirksam, dass das zuerst in das Spritzgießwerkzeug eingespritzte erste Material zumindest bereichsweise aufschmilzt, wenn das zweite Material danach in das Spritzgießwerkzeug eingespritzt wird. Günstigerweise ist der Schmelzpunkt des ersten Materials wesentlich höher, d. h. vorzugsweise mindestens 10 °C höher, als der des zweiten Materials.

Gemäß dem Unteranspruch 4 stehen die erste Rasteinrichtung und die zweite Rasteinrichtung in der Brillenbügel-Betriebsstellung miteinander in Eingriff bzw. Rastverbindung. Die Brillenbügel-Schwenk-Rastanordnung ist dann voll funktionsfähig.

Bei dem durch das Verfahren gemäß dem Unteranspruch 5 hergestellten Brillenbügel sind das Brillenbügel-Grundteil und das Brillenbügel-Verstellteil unlösbar bzw. verliersicher miteinander verbunden. Günstigerweise ist der Rückhaltekörper scheibenartig ausgeführt und übergreift vorzugsweise ein zu dem Inklinations-Lagerkörper benachbarten Ringbereich des Brillenbügel-Verstellteils. Der mindestens eine Rückhaltekörper bildet günstigerweise einen Rückhaltekopf. Das Brillenbügel-Grundteil weist so bei dem Inklinations-Lagerkörper eine Hinterschneidung auf.

Die zwei Inklinations-Endstellungen gemäß dem Unteranspruch 6 ermöglichen die Einstellung verschiedener Inklinationen der mindestens einen Brillenscheibe.

Gemäß dem Unteranspruch 7 erstreckt sich eine Inklinations-Lagerachse des Inklinations-Lagerkörpers im Wesentlichen senkrecht zu einer Anlenk-Lagerachse. Sie erstreckt sich beim Tragen einer entsprechenden Brille vorzugsweise im Wesentlichen horizontal. Die Anlenk-Lagerachse erstreckt sich beim Tragen der Brille vorzugsweise im Wesentlichen vertikal. Gemäß dem Unteranspruch 9 liegt zwischen dem Inklinations-Lagerkörper und dem Brillenbügel-Verstellteil eine im Wesentlichen spielfreie bzw. spaltfreie Verbindung vor. Eine ringförmige Verbindungslinie zwischen dem Inklinations-Lagerkörper und dem Brillenbügel-Verstellteil hat vorzugsweise eine Weite, die zwischen 0,1 mm und 0,3 mm liegt. Es ist von Vorteil, wenn der mindestens eine Rückhaltekörper zumindest bereichsweise diese Verbindungslinie überdeckt bzw. übergreift.

Die Unteransprüche 2 bis 7 können auch Gegenstand des Anspruchs 8 sein. Die Unteransprüche 9 und 10 können auch Gegenstand des Anspruchs 1 sein.

Nachfolgend wird unter Bezugnahme auf die beigefügte Zeichnung eine bevorzugte Ausführungsform der Erfindung beispielhaft beschrieben. Dabei zeigen:
- Fig. 1: eine perspektivische Ansicht einer Brille, die zwei erfindungsgemäße Brillenbügel umfasst,
- Fig. 2: eine Seitenansicht eines Brillenbügel-Grundteils eines in Fig. 1 gezeigten Brillenbügels
- Fig. 3: eine weitere Seitenansicht des Brillenbügel-Grundteils, die gegenüber Fig. 2 um 90° gedreht ist,
- Fig. 4: eine Seitenansicht des in Fig. 1 gezeigten Brillenbügels, der sich in seiner Brillenbügel-Spritzgießstellung befindet,
- Fig. 5: eine Schnittansicht entlang der in Fig. 4 gezeigten Schnittlinie V-V,
- Fig. 6: eine Seitenansicht des in Fig. 1 gezeigten Brillenbügels, der sich in der Brillenbügel-Betriebsstellung befindet, wobei sich das Brillenbügel-Verstellteil in einer unteren Inklinationsendstellung befindet,
- Fig. 7: eine Seitenansicht des in Fig. 6 gezeigten Brillenbügels, wobei sich das Brillenbügel-Verstellteil in einer oberen Inklinationsendstellung befindet, und
- Fig. 8: eine Schnittansicht eines stark vereinfachten Spritzgießwerkzeuges zum Herstellen des erfindungsgemäßen Brillenbügels, die nicht maßstabsgetreu ist und lediglich der allgemeinen Illustration dient.

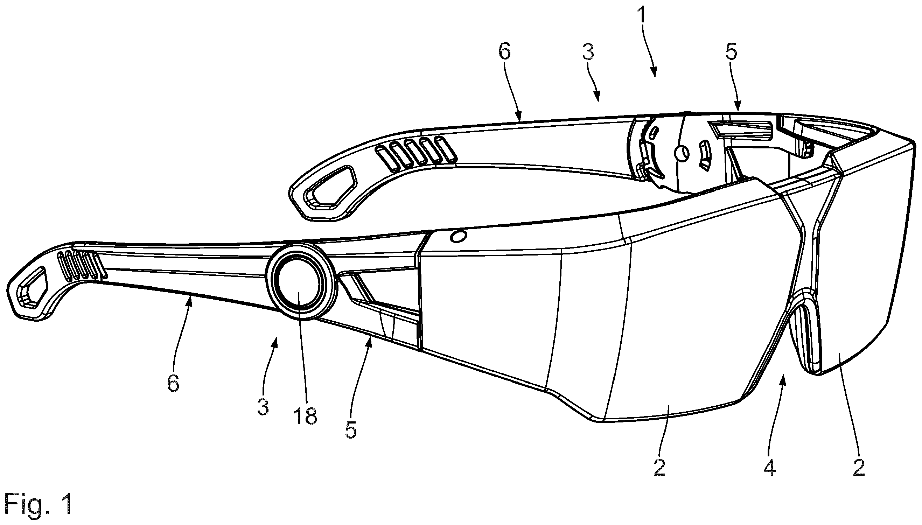

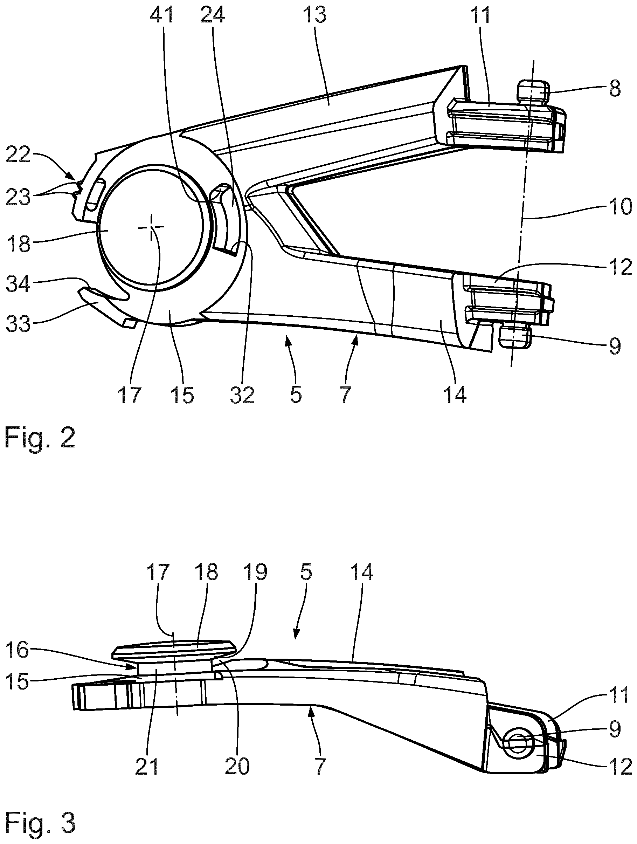

Einander entsprechende Teile sind in Fig. 1 bis 8 mit denselben Bezugszeichen versehen. Auch Einzelheiten des im Folgenden näher erläuterten Ausführungsbeispiels können für sich genommen eine Erfindung darstellen oder Teil eines Erfindungsgegenstands sein.

Zunächst bezugnehmend auf Fig. 1 umfasst eine Brille 1 zwei Sichtscheiben 2 und zwei Brillenbügel 3. Zwischen den Sichtscheiben 2 liegt eine Nasenaussparung 4 zur Aufnahme der Nase eines Brillenträgers (nicht dargestellt) vor. Die beiden Sichtscheiben 2 sind nebeneinander angeordnet. Alternativ ist eine einteilige, einzige Sichtscheibe 2 vorhanden. An jeder Sichtscheibe 2 ist seitlich außen einer der Brillenbügel 3 angelenkt. Die Brillenbügel 3 sind so gegenüber der Sichtscheibe 2 verschwenkbar. Alternativ sind die Brillenbügel 3 an Brillenrahmenteilen der Brille 1 angelenkt. Die Brille 1 ist bezüglich einer Symmetrieebene symmetrisch, die durch die Nasenaussparung 4 geht.

Nachdem die Brillenbügel 3 zwar gespiegelt, aber konstruktiv identisch sind, wird nachfolgend im Allgemeinen nur noch einer der Brillenbügel 3 beschrieben.

Jeder Brillenbügel 3 hat ein Brillenbügel-Grundteil 5 und ein Brillenbügel-Verstellteil 6, das an dem Brillenbügel-Grundteil 5 angeordnet ist und mit diesem so in direktem Kontakt steht. Das Brillenbügel-Grundteil 5 und das Brillenbügel-Verstellteil 6 sind miteinander gekoppelt und zueinander verschwenkbar.

Das Brillenbügel-Grundteil 5 hat einen Grundkörper 7. Der Grundkörper 7 trägt endseitig zwei Anlenk-Lagerkörper 8, 9, die jeweils zapfenartig ausgeführt sind und eine gemeinsame Anlenk-Lagerachse 10 definieren. Jeder Anlenk-Lagerkörper 8, 9 ist an einem Tragvorsprung 11 bzw. 12 angeordnet, der wiederum von einem jeweiligen Tragarm 13 bzw. 14 des Grundkörpers 7 vorspringt. Die Anlenk-Lagerkörper 8, 9 sind an einander abgewandten Tragflächen der Tragvorsprünge 11, 12 angeordnet und springen von diesen voneinander weg. Über die Anlenk-Lagerkörper 8, 9 ist das Brillenbügel-Grundteil 5 an der jeweiligen Sichtscheibe 2 bzw. einem Brillenrahmenteil der Brille 1 gelenkig anordenbar.

Die Tragarme 13, 14 laufen schräg zueinander und stehen über eine Basis 15 des Grundkörpers 7 miteinander in fester Verbindung. Alternativ hat der Grundkörper 7 nur genau einen Tragarm 13, 14. Alternativ trägt der Grundkörper 7 nur genau einen Anlenk-Lagerkörper 8, 9.

Von der Basis 15 springt ein zylindrischer Inklinations-Lagerkörper 16 nach außen vor, der eine Inklinations-Lagerachse 17 definiert und umfangsseitig einen Inklinations-Lagerbereich 21 aufweist. Der Inklinations-Lagerkörper 16 springt im Wesentlichen senkrecht von der Basis 15 vor und ist starr. Er ist nicht zusammendrückbar. Die Inklinations-Lagerachse 17 erstreckt sich im Wesentlichen senkrecht zu der jeweiligen Anlenk-Lagerachse 10.

Der Inklinations-Lagerkörper 16 trägt gegenüberliegend zu der Basis 15 einen scheibenartigen Rückhaltekopf 18. Der Rückhaltekopf 18 springt gegenüber dem Inklinations-Lagerkörper 16 in Bezug auf die Inklinations-Lagerachse 17 in radialer Richtung nach außen vor und ist starr. Er verläuft beabstandet zu der Basis 15 und ist nicht zusammendrückbar.

Der Rückhaltekopf 18 hat eine der Basis 15 zugewandte Rückhaltefläche 19, die leicht konisch verläuft. Die Rückhaltefläche 19 verläuft von dem Inklinations-Lagerkörper 16 nach oben außen.

Zwischen der Basis 15 und der Rückhaltefläche 19 liegt ein Hinterschnittbereich 20 vor.

An der Basis 15 ist im Wesentlichen gegenüberliegend zu dem oberen Tragarm 13 seitlich eine erste Rasteinrichtung 22 angeordnet, die zwei erste Rastzähne 23 umfasst. Eine andere Anzahl ist möglich. Die ersten Rastzähne 23 sind beabstandet zu der Inklinations-Lagerachse 17 angeordnet. Die erste Rasteinrichtung 22 erstreckt sich in einem Winkelbereich bogenförmig um die Inklinations-Lagerachse 17. Die ersten Rastzähne 23 springen von der Inklinations-Lagerachse 17 weg.

Die Basis 15 ist von einer Anschlagsaussparung 24, insbesondere vollständig, durchsetzt. Die Anschlagsaussparung 24 ist beabstandet zu der Inklinations-Lagerachse 17 angeordnet und erstreckt sich bogenförmig in einem Winkelbereich um diese. Die Inklinations-Lagerachse 17 erstreckt sich im Wesentlichen zwischen der ersten Rasteinrichtung 22 und der Anschlagsaussparung 24.

Das Brillenbügel-Grundteil 5 ist einteilig ausgebildet. Insbesondere sind der Grundkörper 7, der Inklinations-Lagerkörper 16, der Rückhaltekopf 18 und die erste Rasteinrichtung 22 einteilig miteinander verbunden.

Das einteilige Brillenbügel-Verstellteil 6 hat einen Kopplungsbereich 25 und einen sich an den Kopplungsbereich 25 anschließenden Bügelbereich 26.

Der Kopplungsbereich 25 ist benachbart zu der Basis 15 angeordnet und steht mit dieser in direktem Kontakt. Er steht mit der Basis 15 in gelenkiger Verbindung.

In dem Kopplungsbereich 25 ist eine durchgängige Inklinations-Lageröffnung 27 ausgebildet, die im Querschnitt kreisförmig ist und umfangsseitig vollständig geschlossen ist. Die Inklinations-Lageröffnung 27 ist in ihrem Durchmesser an den Außendurchmesser des Inklinations-Lagerkörpers 16 angepasst. Insbesondere ist der Durchmesser der Inklinations-Lageröffnung 27 identisch bzw. im Wesentlichen identisch mit dem Außendurchmesser des Inklinations-Lagerkörpers 16. Der Kopplungsbereich 25 bzw. das Brillenbügel-Verstellteil 6 umgibt im Wesentlichen spielfrei bzw. spaltfrei vollständig den Inklinations-Lagerbereich 25.

Der Kopplungsbereich 25 trägt eine zweite Rasteinrichtung 28 mit mehreren hintereinander angeordneten zweiten Rastzähnen 29. Die zweiten Rastzähne 29 sind an die ersten Rastzähne 23 angepasst. Sie sind beabstandet zu der Inklinations-Lagerachse 17 angeordnet. Die zweite Rasteinrichtung 28 erstreckt sich in einem Winkelbereich bogenförmig um die Inklinations-Lagerachse 17.

Ferner trägt der Kopplungsbereich 25 einen Anschlagsvorsprung 30, der in die Anschlagsaussparung 24 von außen eingreift. Der Anschlagsvorsprung 30 verläuft beabstandet und parallel zu dem Inklinations-Lagerkörper 16. Er hat eine nach unten gewandte Anschlagsfläche 31 zur Anlage in einer Anschlagsposition an einer die Anschlagsaussparung 24 unten begrenzenden Anschlagsfläche 32 des Brillenbügel-Grundteils 5.

Das Brillenbügel-Grundteil 5 trägt einen eine vordere Anschlagsfläche 34 aufweisenden Anschlagsansatz 33 zur Anlage in einer anderen Anschlagsposition mit seiner Anschlagsfläche 34 an einer nach unten gewandten Anschlagsfläche 35 an dem Brillenbügel-Verstellteil 6.

Der Kopplungsbereich 25 liegt an der Basis 15, insbesondere flächig, außen an. Der Rückhaltekopf 18 übergreift gleichmäßig die Inklinations-Lageröffnung 27 und überdeckt die ringförmig verlaufende Verbindungslinie zwischen dem Inklinations-Lagerkörper 16 und dem Kopplungsbereich 25 bzw. dem Brillenbügel-Verstellteil 6. Der Rückhaltekopf 18 übergreift die Verbindungslinie konstant um mindestens 2 mm. Die Rückhaltefläche 19 liegt an dem Kopplungsbereich 25, insbesondere flächig, an. In einem an die Inklinations-Lageröffnung 27 angrenzenden Ringbereich ist der Kopplungsbereich 25 im Wesentlichen konisch ausgebildet.

Das Brillenbügel-Verstellteil 6 umgibt den jeweiligen Inklinations-Lagerbereich 21 vollständig und greift dabei in den jeweiligen Hinterschnittbereich 20 formschlüssig ein.

Das Brillenbügel-Verstellteil 6 liegt an dem jeweiligen Grundkörper 7 und der Rückhaltefläche 19 sowie an dem Inklinations-Lagerbereich 21 zumindest bereichsweise, günstigerweise vollständig, an.

In der Betriebsstellung des jeweiligen Brillenbügels 3 stehen die Rasteinrichtungen 22, 28 miteinander in Eingriff. Durch Aufbringen einer entsprechenden Verstellkraft auf das jeweilige Brillenbügel-Verstellteil 6 ist das Brillenbügel-Verstellteil 6 gegenüber dem Brillenbügel-Grundteil 5 unter Überwindung der erzeugten Rastkraft zwischen den Rasteinrichtungen 22, 28 um die Inklinations-Lagerachse 17 verschwenkbar, wodurch die Inklination der Brille 1 veränderbar ist.

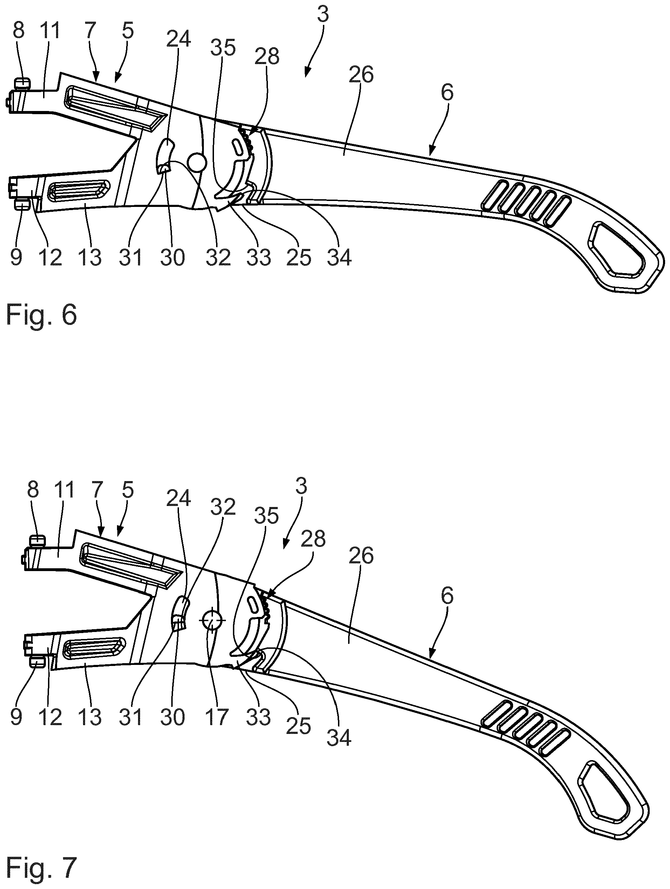

Der Verschwenkweg ist beschränkt. In einer ersten Endstellung des Brillenbügel-Grundteils 5 und des Brillenbügel-Verstellteils 6 zueinander liegt der Anschlagsvorsprung 30 mit seiner unteren Anschlagsfläche 31 innen an der Anschlagsfläche 32 an und steht einer weiteren Verschwenkung blockierend im Wege (Fig. 6). Die Anschlagsfläche 32 ist unten in Bezug auf die Anschlagsaussparung 24 angeordnet und nach oben gewandt. Der Brillenbügel 3 verläuft dann insgesamt im Wesentlichen gerade. Dabei handelt es sich um eine untere Inklinationsendstellung. Der Anschlagsansatz 33 ist funktionslos. Die Rasteinrichtungen 22, 28 stehen miteinander in Eingriff.

In einer zweiten Endstellung des Brillenbügel-Grundteils 5 und des Brillenbügel-Verstellteils 6 zueinander liegt der Anschlagsansatz 33 mit seiner Anschlagsfläche 34 an der Anschlagsfläche 35 an und steht einer weiteren Verschwenkung um die Inklinations-Lagerachse 17 blockierend im Wege (Fig. 7). Der Brillenbügel 3 ist bei dem Gelenk geneigt. Das Brillenbügel-Verstellteil 6 ist gegenüber der unteren Inklinationsendstellung nach unten verschwenkt. Dabei handelt es sich um eine obere Inklinationsendstellung. Der Anschlagsvorsprung 30 ist beabstandet zu den Anschlagsflächen 32, 42 in der Anschlagsaussparung 24 angeordnet. Die Rasteinrichtungen 22, 28 stehen miteinander in Eingriff.

In montiertem Zustand der Brille 1 greifen die Anlenk-Lagerkörper 8, 9 in entsprechende Anlenk-Lageraussparungen (nicht dargestellt) an einem jeweiligen Brillenrahmenteil bzw. der jeweiligen Sichtscheibe 2 ein, sodass die Brillenbügel 3 um die entsprechenden Anlenk-Lagerachsen 10 verschwenkbar sind.

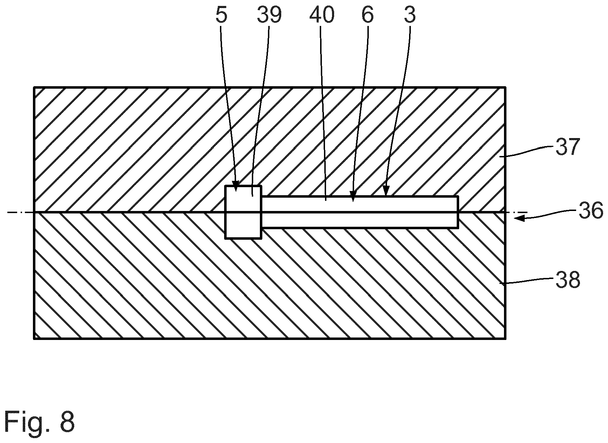

Nachfolgend wird das Verfahren zur Herstellung eines Brillenbügels 3 beschrieben. Der Brillenbügel 3 wird in einem Spritzgießwerkzeug 36 (Fig. 8) hergestellt, das ein erstes und ein zweites Werkzeugteil 37 bzw. 38 umfasst. Die Werkzeugteile 37, 38 sind relativ zueinander verlagerbar. Insbesondere sind diese zwischen einer Öffnungs- und Schließstellung relativ zueinander beweglich.

Zur Herstellung des Brillenbügel-Grundteils 5 wird ein erstes Kunststoffmaterial in eine Brillenbügel-Grundteil-Kavität 39 eingespritzt, die in einer Schließstellung des Spritzgießwerkzeugs 36 durch die Werkzeugteile 37, 38 begrenzt ist. Die Brillenbügel-Grundteil-Kavität 39 ist dazu entsprechend dem Brillenbügel-Grundteil 5 geformt bzw. dimensioniert.

Nachdem das erste Kunststoffmaterial in der Brillenbügel-Grundteil-Kavität 39 ausgehärtet ist oder beim Aushärten des ersten Kunststoffmaterials, wird das Spritzgießwerkzeug 36 geöffnet. Das Spritzgießwerkzeug 36 wird zur Erzeugung einer Brillenbügel-Verstellteil-Kavität 40 verstellt.

Das Spritzgießwerkzeug 36 wird dann geschlossen, wodurch die Brillenbügel-Verstellteil-Kavität 40 des Spritzgießwerkzeugs 36 in dem Spritzgießwerkzeug 36 begrenzt wird. Die Brillenbügel-Verstellteil-Kavität 40 grenzt an die Brillenbügel-Grundteil-Kavität 39 bzw. an das dann in dieser vorliegende Brillenbügel-Grundteil 5 direkt an und ist dorthin offen.

Dann wird zur Herstellung des Brillenbügel-Verstellteils 6 ein zweites Kunststoffmaterial in die Brillenbügel-Verstellteil-Kavität 40 eingespritzt. Die Brillenbügel-Verstellteil-Kavität 40 ist in ihrer Form und Größe an das Brillenbügel-Verstellteil 6 angepasst. Die Brillenbügel-Verstellteil-Kavität 40 ist derart gegenüber der Brillenbügel-Grundteil-Kavität 39 positioniert, dass das Brillenbügel-Verstellteil 6 wie angegeben gegenüber dem Brillenbügel-Grundteil 5 angeordnet ist.

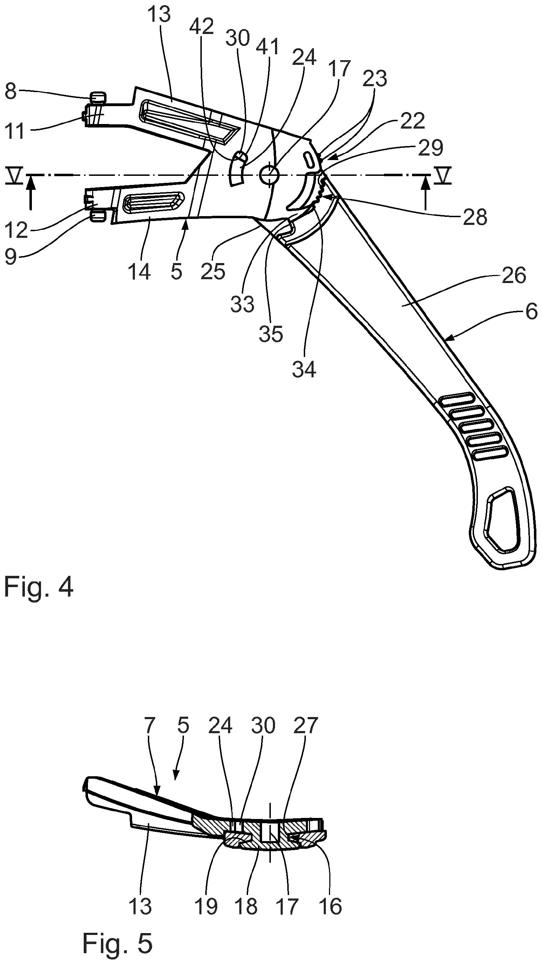

Wenn der Brillenbügel 3 aus dem Spritzgießwerkzeug 36 entnommen wird, befindet sich der Brillenbügel 3 in einer Brillenbügel-Spritzgießstellung (siehe Fig. 4, 5). Das Brillenbügel-Grundteil 5 und das Brillenbügel-Verstellteil 6 sind unlösbar gelenkig miteinander verbunden und verlaufen geneigt zueinander. Der Anschlagsvorsprung 30 liegt mit seiner oberen Anschlagsfläche 41 an einer die Anschlagsaussparung 24 nach oben begrenzenden Anschlagsfläche 42 des Brillenbügel-Grundteils 5 an und verhindert eine Verschwenkung des Brillenbügel-Verstellteils 6 gegenüber dem Brillenbügel-Grundteil 5 nach unten. Der Anschlagsansatz 33 ist funktionslos.

Zwischen dem Brillenbügel-Grundteil 5 und Brillenbügel-Verstellteil 6 liegt bereits bei Entnahme aus dem Spritzgießwerkzeug 36 ein fertiges Schwenkgelenk vor. Die Rasteinrichtungen 22, 28 sind beabstandet zueinander und stehen außer Eingriff. Die Rasteinrichtungen 22, 28 sind um die Inklinations-Lagerachse 17 beabstandet zueinander.

Zum Überführen des Brillenbügels 3 aus der Brillenbügel-Spritzgießstellung in eine Brillenbügel-Betriebsstellung wird eine entsprechende Kraft zwischen dem Brillenbügel-Grundteil 5 und dem Brillenbügel-Verstellteil 6 aufgebracht. Das Brillenbügel-Grundteil 5 und das Brillenbügel-Verstellteil 6 werden derart zueinander um die Inklinations-Lagerachse 17 verschwenkt, dass die Rasteinrichtungen 22, 28 in Eingriff miteinander gelangen.

Das Brillenbügel-Grundteil 5 und das Brillenbügel-Verstellteil 6 befinden sich dann in einer im Wesentlichen gestreckten Position. Ein zu weites Verschwenken des Brillenbügel-Grundteils 5 und des Brillenbügel-Verstellteils 6 wird durch den Anschlagsvorsprung 30 verhindert.

## Patentansprüche

1. Verfahren zur Herstellung eines Brillenbügels (3), umfassend die Schritte
- Einspritzen eines ersten Materials in ein Spritzgießwerkzeug (36) unter Bildung eines Brillenbügel-Grundteils (5) mit einem Grundkörper (7) und einem Inklinations-Lagerkörper (16),
- Einspritzen eines zweiten Materials in eine Brillenbügel-Verstellteil-Kavität (40) des Spritzgießwerkzeugs (36) unter mindestens teilweiser Umspritzung des Inklinations-Lagerkörpers (16) zur Bildung eines von dem Inklinations-Lagerkörper (16) durchsetzten und gegenüber diesem verschwenkbaren Brillenbügel-Verstellteils (6), nachdem das erste Material zumindest teilweise ausgehärtet ist, und
- Entfernen des sich in einer Brillenbügel-Spritzgießstellung befindlichen Brillenbügels (3) aus dem Spritzgießwerkzeug (36), wenn das erste Material und das zweite Material zumindest teilweise ausgehärtet sind,
-- wobei das Brillenbügel-Grundteil (5) und das Brillenbügel-Verstellteil (6) in einer Brillenbügel-Betriebsstellung um mindestens 2° um den Inklinations-Lagerkörper (16) verschwenkbar sind,
-- wobei eine Brillenbügel-Schwenk-Rastanordnung zum rastenden Verschwenken des Brillenbügel-Verstellteils (6) und des Brillenbügel-Grundteils (5) um den Inklinations-Lagerkörper (16) zueinander vorhanden ist,
-- wobei die Brillenbügel-Schwenk-Rastanordnung an dem Brillenbügel-Grundteil (5) eine erste Rasteinrichtung (22) aufweist, die sich zumindest bereichsweise um eine Inklinations-Lagerachse (17) des Inklinations-Lagerkörpers (16) erstreckt,
-- wobei die Brillenbügel-Schwenk-Rastanordnung an dem Brillenbügel-Verstellteil (6) eine zweite Rasteinrichtung (28) aufweist,
-- wobei das Brillenbügel-Grundteil (5) und das Brillenbügel-Verstellteil (6) unlösbar miteinander verbunden sind,
**gekennzeichnet durch**
- Verschwenken des Brillenbügel-Grundteils (5) und des Brillenbügel-Verstellteils (6) um den Inklinations-Lagerkörper (16) relativ zueinander, um den Brillenbügel (3) aus der Brillenbügel-Spritzgießstellung in die Brillenbügel-Betriebsstellung zu bringen,
- wobei die erste Rasteinrichtung (22) und die zweite Rasteinrichtung (28) in der Brillenbügel-Spritzgießstellung außer Eingriff miteinander stehen.

2. Verfahren nach Anspruch 1, **dadurch gekennzeichnet, dass** nach dem Einspritzen des ersten Materials in das Spritzgießwerkzeug (36) und vor dem Einspritzen des zweiten Materials in das Spritzgießwerkzeug (36) die Brillenbügel-Verstellteil-Kavität (40) für das zweite Material in dem Spritzgießwerkzeug (36) erzeugt wird.

3. Verfahren nach Anspruch 1 oder 2, **dadurch gekennzeichnet, dass** das erste Material und das zweite Material unterschiedliche Materialien, insbesondere Kunststoffmaterialien, sind.

4. Verfahren nach einem der vorherigen Ansprüche, **dadurch gekennzeichnet, dass** die erste Rasteinrichtung (22) und die zweite Rasteinrichtung (28) in der Brillenbügel-Betriebsstellung miteinander in Eingriff stehen.

5. Verfahren nach einem der vorherigen Ansprüche, **dadurch gekennzeichnet, dass** das Brillenbügel-Grundteil (5) mindestens einen an dem Inklinations-Lagerkörper (16) angeordneten Rückhaltekörper (18) umfasst, der das Brillenbügel-Verstellteil (6) mindestens teilweise übergreift und das Brillenbügel-Grundteil (5) und das Brillenbügel-Verstellteil (6) unlösbar miteinander verbindet.

6. Verfahren nach einem der vorherigen Ansprüche, **dadurch gekennzeichnet, dass** das Brillenbügel-Grundteil (5) und das Brillenbügel-Verstellteil (6) zwischen zwei Inklinations-Endstellungen verschwenkbar sind.

7. Verfahren nach einem der vorherigen Ansprüche, **dadurch gekennzeichnet, dass** das Brillenbügel-Grundteil (5) mindestens einen Anlenk-Lagerkörper (8, 9) zur gelenkigen Verbindung mit einer Brillenscheibe (2) und/oder einem Brillenrahmenteil umfasst, wobei sich eine Inklinations-Lagerachse (17) des Inklinations-Lagerkörpers (16) im Wesentlichen senkrecht zu einer Anlenk-Lagerachse (10) erstreckt.

8. Brillenbügel, insbesondere hergestellt nach einem Verfahren gemäß einem der vorherigen Ansprüche,
a) mit einem Brillenbügel-Grundteil (5), der einen Inklinations-Lagerkörper (16) umfasst,
b) mit einem Brillenbügel-Verstellteil (6),
i) wobei das Brillenbügel-Grundteil (5) und das Brillenbügel-Verstellteil (6) relativ zueinander verschwenkbar sind,
ii) wobei das Brillenbügel-Grundteil (5) und das Brillenbügel-Verstellteil (6) unlösbar miteinander verbunden sind,
iii) wobei das Brillenbügel-Grundteil (5) und das Brillenbügel-Verstellteil (6) in einer Brillenbügel-Betriebsstellung um mindestens 2° um den Inklinations-Lagerkörper (16) verschwenkbar sind, und
c) mit einer Brillenbügel-Schwenk-Rastanordnung zum rastenden Verschwenken des Brillenbügel-Verstellteils (6) und des Brillenbügel-Grundteils (5) um den Inklinations-Lagerkörper (16) zueinander,
i) wobei die Brillenbügel-Schwenk-Rastanordnung an dem Brillenbügel-Grundteil (5) eine erste Rasteinrichtung (22) aufweist, die sich zumindest bereichsweise um eine Inklinations-Lagerachse (17) des Inklinations-Lagerkörpers (16) erstreckt,
ii) wobei die Brillenbügel-Schwenk-Rastanordnung an dem Brillenbügel-Verstellteil (6) eine zweite Rasteinrichtung (28) aufweist,
iii) wobei die erste Rasteinrichtung (22) und die zweite Rasteinrichtung (28) in einer zu der Brillenbügel-Betriebsstellung verschiedenen Stellung außer Eingriff miteinander stehen.

9. Brillenbügel nach Anspruch 8, **dadurch gekennzeichnet, dass** zwischen dem Inklinations-Lagerkörper (16) und dem Brillenbügel-Verstellteil (6) eine im Wesentlichen spielfreie Verbindung vorliegt.

10. Brillenbügel nach einem der Ansprüche 8 bis 9, **gekennzeichnet durch** mindestens einen zwischen dem Brillenbügel-Verstellteil (6) und dem Brillenbügel-Grundteil (5) wirksamen Anschlag zum Begrenzen einer Schwenkbewegung zwischen dem Brillenbügel-Grundteil (5) und dem Brillenbügel-Verstellteil (6) um den Inklinations-Lagerkörper (16).

## Claims

1. Method for the production of an eyeglass temple (3), the method comprising the steps of
- injecting a first material into an injection molding tool (36) so as to form an eyeglass temple main part (5) with a main body (7) and an inclination bearing body (16),
- injecting a second material into an eyeglass temple adjustment part cavity (40) of the injection molding tool (36) such that the inclination bearing body (16) is overmolded at least partly to form an eyeglass temple adjustment part (6), which is penetrated by the inclination bearing body (16) and is pivotable in relation thereto, after the first material has cured at least partly, and
- removing the eyeglass temple (3), which is in an eyeglass temple injection molding position, from the injection molding tool (36) when the first material and the second material have cured at least partly,
-- wherein the eyeglass temple main part (5) and the eyeglass temple adjustment part (6) are pivotable about the inclination bearing body (16) through at least 2° in an eyeglass temple operating position,
-- wherein an eyeglass temple pivoting and latching arrangement is provided, which allows the eyeglass temple adjustment part (6) and the eyeglass temple main part (5) to be pivoted relative to one another about the inclination bearing body (16) in a latching manner,
-- wherein the eyeglass temple pivoting and latching arrangement has a first latching device (22) on the eyeglass temple main part (5), the first latching device (22) extending about an inclination bearing axis (17) of the inclination bearing body (16) at least partly,
-- wherein the eyeglass temple pivoting and latching arrangement has a second latching device (28) on the eyeglass temple adjustment part (6),
-- wherein the eyeglass temple main part (5) and the eyeglass temple adjustment part (6) are non-detachably connected to one another,
**characterized by**
- pivoting the eyeglass temple main part (5) and the eyeglass temple adjustment part (6) about the inclination bearing body (16) relative to one another to move the eyeglass temple (3) from the eyeglass temple injection molding position into the eyeglass temple operating position,
- wherein the first latching device (22) and the second latching device (28) are disengaged from one another in the eyeglass temple injection molding position.

2. Method according to claim 1, **characterized in that** the eyeglass temple adjustment part cavity (40) for the second material is created in the injection molding tool (36) after the injection of the first material into the injection molding tool (36) and prior to the injection of the second material into the injection molding tool (36).

3. Method according to claim 1 or 2, **characterized in that** the first material and the second material are different materials, in particular plastic materials.

4. Method according to any one of the preceding claims, **characterized in that** the first latching device (22) and the second latching device (28) engage one another in the eyeglass temple operating position.

5. Method according to any one of the preceding claims, **characterized in that** the eyeglass temple main part (5) comprises at least one retaining body (18) arranged on the inclination bearing body (16), the retaining body (18) reaching over the eyeglass temple adjustment part (6) at least partly and connecting the eyeglass temple main part (5) to the eyeglass temple adjustment part (6) non-detachably.

6. Method according to any one of the preceding claims, **characterized in that** the eyeglass temple main part (5) and the eyeglass temple adjustment part (6) are pivotable between two inclination end positions.

7. Method according to any one of the preceding claims, **characterized in that** the eyeglass temple main part (5) comprises at least one hinge bearing body (8, 9) to form a hinged connection with a lens (2) and/or an eyeglass frame part, an inclination bearing axis (17) of the inclination bearing body (16) extending substantially perpendicular to a hinge bearing axis (10).

8. Eyeglass temple, in particular produced according to a method as claimed in any one of the preceding claims,
a) with an eyeglass temple main part (5), which comprises an inclination bearing body (16),
b) with an eyeglass temple adjustment part (6),
i) wherein the eyeglass temple main part (5) and the eyeglass temple adjustment part (6) are pivotable relative to one another,
ii) wherein the eyeglass temple main part (5) and the eyeglass temple adjustment part (6) are non-detachably connected to one another,
iii) wherein the eyeglass temple main part (5) and the eyeglass temple adjustment part (6) are pivotable about the inclination bearing body (16) through at least 2° in an eyeglass temple operating position, and
c) with an eyeglass temple pivoting and latching arrangement, which allows the eyeglass temple adjustment part (6) and the eyeglass temple main part (5) to be pivoted relative to one another about the inclination bearing body (16) in a latching manner,
i) wherein the eyeglass temple pivoting and latching arrangement has a first latching device (22) on the eyeglass temple main part (5), the first latching device (22) extending about an inclination bearing axis (17) of the inclination bearing body (16) at least partly,
ii) wherein the eyeglass temple pivoting and latching arrangement has a second latching device (28) on the eyeglass temple adjustment part (6),
iii) wherein the first latching device (22) and the second latching device (28) are disengaged from one another in a position different from the eyeglass temple operating position.

9. Eyeglass temple according to claim 8, **characterized in that** there is a connection between the inclination bearing body (16) and the eyeglass temple adjustment part (6), which is substantially free of play.

10. Eyeglass temple according to any one of claims 8 to 9, **characterized by** at least one stop, which is active between the eyeglass temple adjustment part (6) and the eyeglass temple main part (5), to limit a pivoting movement between the eyeglass temple main part (5) and the eyeglass temple adjustment part (6) about the inclination bearing body (16).

## Revendications

1. Procédé pour la fabrication d'une branche de lunettes (3), comprenant les étapes
- injection d'un premier matériau dans un outil de moulage par injection (36) en formant une partie de base pour branche de lunettes (5) avec un corps de base (7) et un corps porteur d'inclinaison (16),
- injection d'un deuxième matériau dans une cavité d'élément de réglage pour branche de lunettes (40) de l'outil de moulage par injection (36) en, au moins partiellement, surmoulant le corps porteur d'inclinaison (16) pour former un élément de réglage pour branche de lunettes (6), pénétré par le corps porteur d'inclinaison (16) et pivotable par rapport à celui-ci, après que le premier matériau a au moins partiellement durci, et
- enlèvement de la branche de lunettes (3), se trouvant dans une position de moulage par injection de branche de lunettes, de l'outil de moulage par injection (36), après que le premier matériau et le deuxième matériau ont au moins partiellement durci,
-- la partie de base pour branche de lunettes (5) et l'élément de réglage pour branche de lunettes (6) étant pivotants d'au moins 2° atour du corps porteur d'inclinaison (16) dans une position de service de branche de lunettes,
-- un ensemble de pivotement et d'enclenchement pour branche de lunettes, pour pivoter l'élément de réglage pour branche de lunettes (6) et la partie de base pour branche de lunettes (5) l'un par rapport à l'autre de manière enclenchant autour du corps porteur d'inclinaison (16), étant présent,
-- l'ensemble de pivotement et d'enclenchement pour branche de lunettes présentant un premier dispositif d'enclenchement (22) sur la partie de base pour branche de lunettes (5), qui s'étend au moins par endroits autour d'un axe porteur d'inclinaison (17) du corps porteur d'inclinaison (16),
-- l'ensemble de pivotement et d'enclenchement pour branche de lunettes présentant un deuxième dispositif d'enclenchement (28) sur l'élément de réglage pour branche de lunettes (6),
-- la partie de base pour branche de lunettes (5) et l'élément de réglage pour branche de lunettes (6) étant liés l'un à l'autre de manière non détachable,
**caractérisé par**
- le pivotement de la partie de base pour branche de lunettes (5) et de l'élément de réglage pour branche de lunettes (6) autour du corps porteur d'inclinaison (16) l'un par rapport à l'autre afin d'apporter la branche de lunettes (3) de la position de moulage par injection de branche de lunettes dans la position de service de branche de lunettes,
- le premier dispositif d'enclenchement (22) et le deuxième dispositif d'enclenchement (28) n'étant pas engrenés dans la position de moulage par injection de branche de lunettes.

2. Procédé selon la revendication 1, **caractérisé en ce qu'**après l'injection du premier matériau dans l'outil de moulage par injection (36) et avant l'injection du deuxième matériau dans l'outil de moulage par injection (36), la cavité d'élément de réglage pour branche de lunettes (40) pour le deuxième matériau est générée dans l'outil de moulage par injection (36).

3. Procédé selon la revendication 1 ou 2, **caractérisé en ce que** le premier matériau et le deuxième matériau sont des matériaux différents, en particulier des matériaux plastiques.

4. Procédé selon l'une quelconque des revendications précédentes, **caractérisé en ce que** le premier dispositif d'enclenchement (22) et le deuxième dispositif d'enclenchement (28) sont engrenés dans la position de service de branche de lunettes.

5. Procédé selon l'une quelconque des revendications précédentes, **caractérisé en ce que** la partie de base pour branche de lunettes (5) comprend au moins un corps de retenue (18) disposé sur le corps porteur d'inclinaison (16), qui, au moins partiellement, étend sur l'élément de réglage pour branche de lunettes (6) et qui lie la partie de base pour branche de lunettes (5) et l'élément de réglage pour branche de lunettes (6) l'un à l'autre de manière non détachable.

6. Procédé selon l'une quelconque des revendications précédentes, **caractérisé en ce que** la partie de base pour branche de lunettes (5) et l'élément de réglage pour branche de lunettes (6) sont pivotants entre deux positions finales d'inclinaison.

7. Procédé selon l'une quelconque des revendications précédentes, **caractérisé en ce que** la partie de base pour branche de lunettes (5) comprend au moins un corps porteur d'articulation (8, 9) pour une liaison articulée avec un verre de lunettes (2) et/ou une partie de monture de lunettes, un axe porteur d'inclinaison (17) du corps porteur d'inclinaison (16) s'étendant essentiellement de manière perpendiculaire à un axe porteur d'articulation (10).

8. Branche de lunettes, en particulier fabriquée suivant un procédé selon l'une quelconque des revendications précédentes, comprenant
a) une partie de base pour branche de lunettes (5) qui comprend un corps porteur d'inclinaison (16),
b) un élément de réglage pour branche de lunettes (6)
i) la partie de base pour branche de lunettes (5) et l'élément de réglage pour branche de lunettes (6) étant pivotants l'un par rapport à l'autre,
ii) la partie de base pour branche de lunettes (5) et l'élément de réglage pour branche de lunettes (6) étant liés l'un à l'autre de manière non détachable,
iii) la partie de base pour branche de lunettes (5) et l'élément de réglage pour branche de lunettes (6) étant pivotants d'au moins 2° atour du corps porteur d'inclinaison (16) dans une position de service de branche de lunettes, et
c) un ensemble de pivotement et d'enclenchement pour branche de lunettes pour pivoter l'élément de réglage pour branche de lunettes (6) et la partie de base pour branche de lunettes (5) l'un par rapport à l'autre de manière enclenchant autour du corps porteur d'inclinaison (16),
i) l'ensemble de pivotement et d'enclenchement pour branche de lunettes présentant un premier dispositif d'enclenchement (22) sur la partie de base pour branche de lunettes (5), qui s'étend au moins par endroits autour d'un axe porteur d'inclinaison (17) du corps porteur d'inclinaison (16),
ii) l'ensemble de pivotement et d'enclenchement pour branche de lunettes présentant un deuxième dispositif d'enclenchement (28) sur l'élément de réglage pour branche de lunettes (6),
iii) le premier dispositif d'enclenchement (22) et le deuxième dispositif d'enclenchement (28) n'étant pas engrenés dans une position autre que la position de service de branche de lunettes.

9. Branche de lunettes selon la revendication 8, **caractérisé en ce qu'**il y a une liaison essentiellement sans jeu entre le corps porteur d'inclinaison (16) et l'élément de réglage pour branche de lunettes (6).

10. Branche de lunettes selon l'une quelconque des revendications 8 à 9, **caractérisé par** au moins une butée effective entre l'élément de réglage pour branche de lunettes (6) et la partie de base pour branche de lunettes (5), pour limiter un mouvement pivotant entre la partie de base pour branche de lunettes (5) et l'élément de réglage pour branche de lunettes (6) autour du corps porteur d'inclinaison (16).
